# EUROPEAN PATENT APPLICATION

(11) **EP 4 513 748 A1**
(43) Date of publication of application: **26.02.2025**
(21) Application number: 23209471.4
(22) Date of filing: 13.11.2023
(51) Int. Cl.: H02S 30/10, B09B 3/00

(54) **REMOVING APPARATUS FOR REMOVING A FRAME FROM A SOLAR PANEL OF A SOLAR CELL MODULE**

(30) Priority: 24.08.2023 TW 112131935
(71) Applicant: National University of Tainan, Tainan City, 70005 (TW)
(72) Inventor: FU, Yao-Hsien, 83073 Kaohsiun City (TW); HUNG, Chia-Tsung, 70848 Tainan City (TW)
(74) Representative: V.O.

(57) **Abstract**

A removing apparatus (200) for removing frame parts (902) from a solar panel (901) of a solar cell module (900) includes a transporting mechanism (4), a panel fixing mechanism (5) and a removing mechanism (6) mounted on a frame mechanism (3). The panel fixing mechanism (5) is operable to move the solar cell module (900) upwardly away from the transporting mechanism (4) and to be retainingly connected with the solar panel (901). The removing mechanism (6) is disposed above the transporting mechanism (4), and includes removing modules (62) respectively registered with the frame parts (902). Each removing module (62) is driven to sequentially thrust and remove two ends of the corresponding frame part (902) from the solar panel (901). Deformation of the frame parts (902) during the removing process is prevented.

## Description

The disclosure relates to a solar cell module processing device, and more particularly to a removing apparatus for removing a frame from a solar panel of a solar cell module.

In recent years, solar cell modules have become very popular as green energy devices, which convert sunlight into electricity to be stored for use in applications. After a period of use the photoelectric conversion efficiency of the solar cell module degrades to a certain extent, and a recycling process where the non-functional solar cell module is discarded is required.

A solar cell module generally includes a solar panel to convert sunlight into electricity, and a frame surrounding the periphery of the solar panel. During the recycling process for removing four frame parts of the frame from the solar panel, the solar cell module is placed on a platform, and a plurality of hydraulic cylinders disposed at front, rear, left and right sides of the solar cell module are used to synchronously remove those frame parts. The conventional processing with the removing devices might cause deformation of the frame parts and prevent reuse of the frame parts, and further manual collection of the bent and deformed frame parts is required, which is inconvenient and labor-intensive.

Therefore, an object of the disclosure is to provide a removing apparatus that can alleviate at least one of the drawbacks of the prior art.

According to an aspect of the disclosure, there is provided a removing apparatus according to claim 1.

With the panel fixing mechanism moving the solar cell module upwardly away from the transporting mechanism and retainingly connected with the solar panel, and with each removing module removing sequentially two ends of the corresponding frame part, the frame parts can be removed from the solar panel while maintaining the shape thereof without any deformation.

Other features and advantages of the disclosure will become apparent in the following detailed description of the embodiments with reference to the accompanying drawings. It is noted that various features may not be drawn to scale.
FIG. 1 is a fragmentary perspective view illustrating an embodiment of a removing apparatus according to the disclosure.
FIG. 2 is a fragmentary, sectional side view of the embodiment.
FIG. 3 is a top view illustrating a transporting mechanism of the embodiment, wherein a portion of a frame mechanism is removed for the sake of clarity.
FIG. 4 is a fragmentary perspective view of the embodiment.
FIG. 5 is a view similar to FIG. 3, illustrating a state when two laterally aligning modules are operated to align a solar cell module.
FIG. 6 is a sectional top view illustrating a removing mechanism of the embodiment.
FIG. 7 is a fragmentary, sectional side view illustrating a panel fixing mechanism raised upwardly and gripping the solar cell module.
FIG. 8 is a fragmentary, sectional front view illustrating a state when left and right frame parts drop on a transporting module of the transporting mechanism.
FIG. 9 is a view similar to FIG. 8, illustrating a state when two deflecting rod modules move the frame parts to two second transition compartments.
FIG. 10 is a sectional top view illustrating a state when front and rear removing modules are driven to remove an end of each of front and rear frame parts.
FIG. 11 is a view similar to FIG. 10, illustrating a state when the front and rear removing modules remove the front and rear frame parts.
FIG. 12 is a sectional top view illustrating a state when left and right removing modules are driven to remove an end of each of the left and right frame parts.
FIG. 13 is a view similar to FIG. 12, illustrating a state when the left and right removing modules remove the left and right frame parts.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

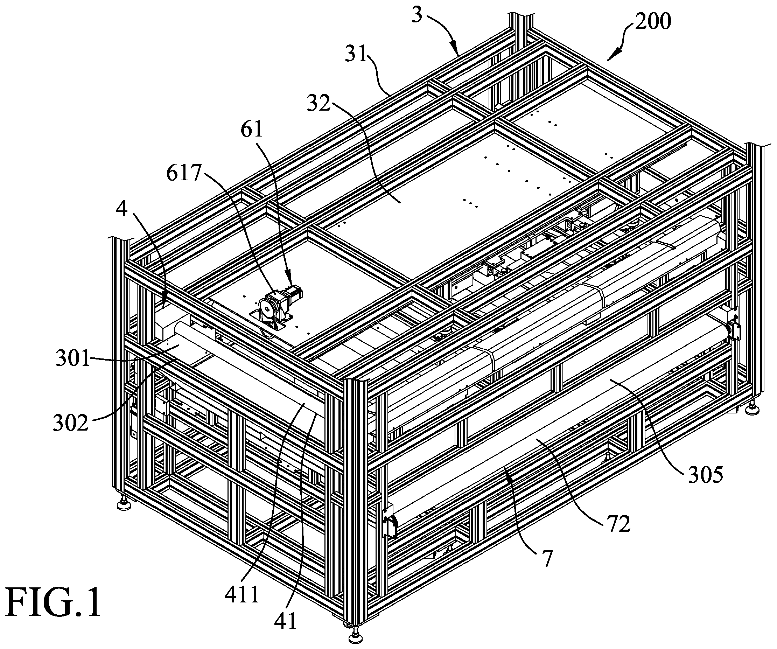

Referring to FIGS. 1, 2 and 3, an embodiment of a removing apparatus 200 for removing a frame from a solar panel 901 of a solar cell module 900 is adapted to be in signal connection with a control device (not shown) so as to be controlled and operated to perform an automatic removing and recycling process for removing the frame from the solar cell module 900. The frame includes front, rear, left and right frame parts 902 attached to front, rear, left and right sides of the solar panel 901 and each having two ends. In this embodiment, the removing and recycling process is for removing and collecting the frame parts 902 from the solar cell module 900.

The removing apparatus 200 includes a frame mechanism 3, a transporting mechanism 4, a panel fixing mechanism 5, a removing mechanism 6 and a frame collecting mechanism 7 which are mounted on the frame mechanism 3.

The frame mechanism 3 includes a frame body 31 composed of a plurality of shafts, and a plurality of wall plates 32 disposed within and surrounding the frame body 31. The frame body 31 and the wall plates 32 cooperatively define an operating compartment 301 which extends in a front-rear direction, a first transition compartment 304 which is in spatial communication with a rear end of the operating compartment 301 in an up-down direction, a collecting compartment 305 which is formed under the operating compartment 301 and which is in spatial communication with the first transition compartment 304, and two second transition compartments 306 which are respectively formed at left and right sides of the operating compartment 301 and which are in spatial communication with both the operating compartment 301 and the collecting compartment 305 in the up-down direction. The operating compartment 301 has an inlet port 302 at a front side for moving the solar cell module 900 therein, and an outlet port 303 at a rear side for moving out the removed solar panel 901 therefrom.

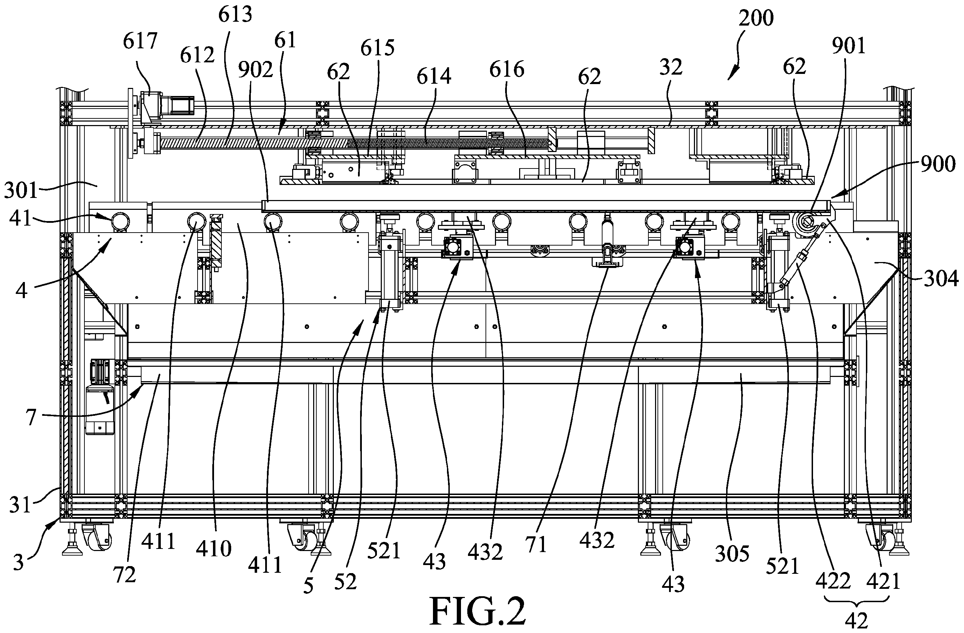

With reference to FIGS. 2, 3, 4 and 5, the transporting mechanism 4 includes a transporting module 41 which is mounted on the frame body 31 and in the operating compartment 301, two rear stop modules 42 which are disposed at a rear side of the transporting module 41 and which are spaced apart from each other in a left-right direction, and two laterally aligning modules 43 which are mounted in the operating compartment 301 and which are spaced apart from each other in the front-rear direction.

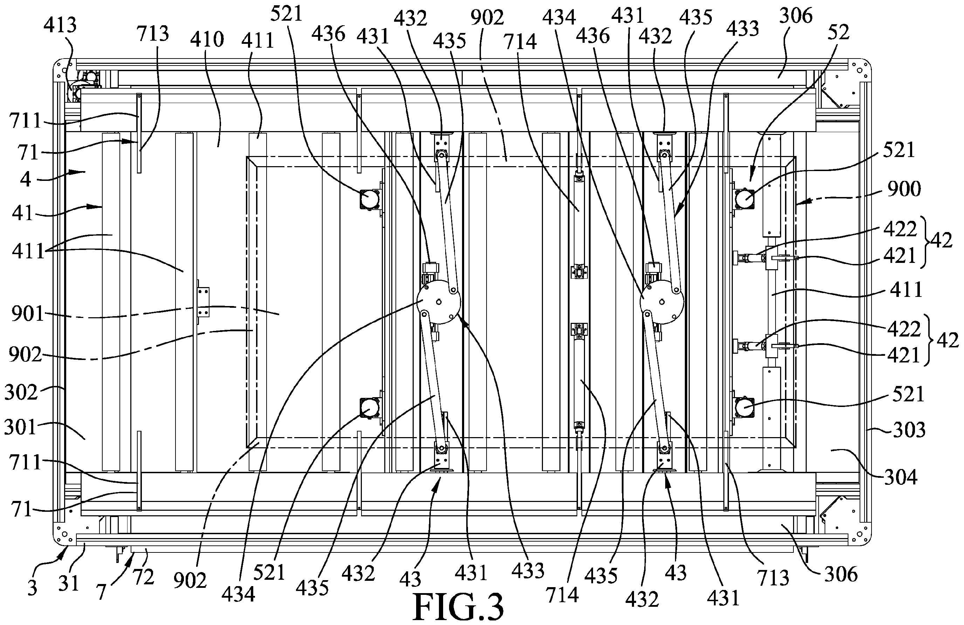

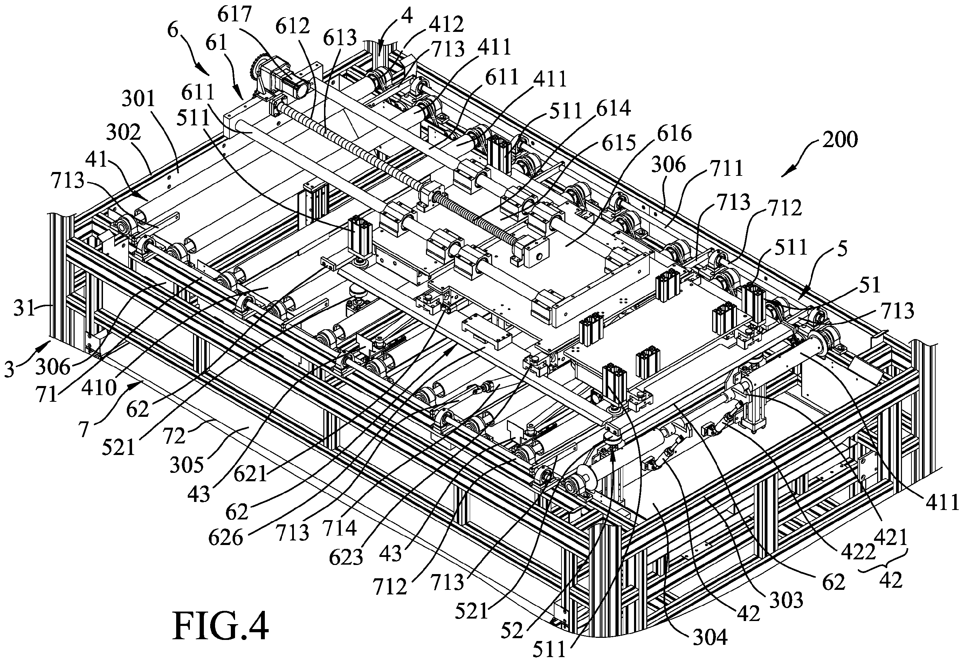

The transporting module 41 includes a plurality of rollers 411 which extend in the left-right direction and are spaced apart from each other in the front-rear direction, an endless transmission member 412 (see FIG. 4) which is trained on the rollers 411, and a transporting driver 413 (see FIG. 3) which is operated to drive rotation of the transmission member 412. A dropdown channel 410 is defined between two adjacent ones of the rollers 411 and is in spatial communication with both the operating compartment 301 and the collecting compartment 305 in the up-down direction. The rollers 411 are disposed for carrying and transporting the solar cell module 900. The transmission member 412 is driven by the transporting driver 413 to make rolling of the rollers 411 so as to move the solar cell module 900 rearwardly. In this embodiment, the transmission member 412 is a chain meshing with the rollers 411, and the transporting driver 413 is a motor. Alternatively, the transmission member 412 may be an endless belt.

With reference to FIGS. 3 and 4, each rear stop module 42 includes a stop member 421 which is rotatably sleeved on the rearmost roller 411, and a stop driver 422 which is mounted on the frame body 31 and coupled with the stop member 421. The stop member 421 is driven by the stop driver 422 to be turned upwardly from a lower retreating position to permit a rearward movement of the solar cell module 900, to an upper stopping position to stop the rearward movement of the solar cell module 900.

In this embodiment, the stop driver 422 is in the form of a telescopic cylinder having upper and lower ends respectively pivoted with the stop member 421 and the frame body 31 and extendable and retractable in the inclined length direction to be shifted to rotate upwardly the stop member 421 to the upper stopping position. The stop driver 422 for rotating the stop member 421 may be implemented in a variety of forms. For example, a motor mechanism may serve as the stop driver 422.

Moreover, the rear stop module 42 may be implemented in a variety of forms. For example, the stop driver 422 may be in the form of a telescopic cylinder extending uprightly, and be controlled to project upwardly higher than the transporting module 41 to stop the rearward movement of the solar cell module 900. Alternatively, the transporting mechanism 4 may include only one rear stop module 42.

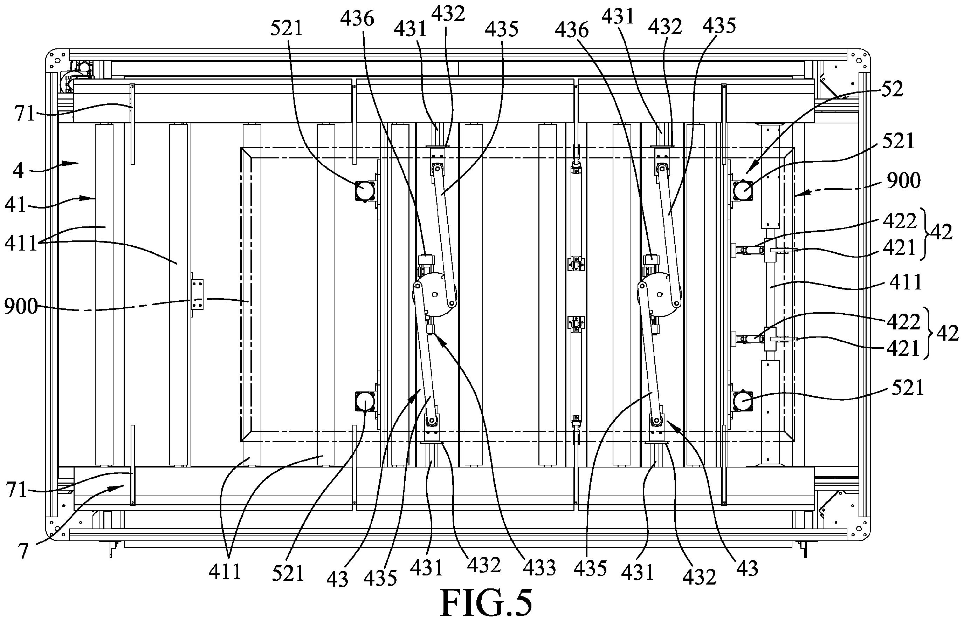

With reference to FIGS. 3 and 5, each laterally aligning module 43 includes two guide rails 431 which extend in the left-right direction and which are mounted on the frame body 31, two laterally aligning members 432 which are slidably mounted on the guide rails 431, and a synchronizing transmitting unit 433 which is coupled with the laterally aligning members 432 to synchronize movement of the laterally aligning members 432 along the guide rails 431. The synchronizing transmitting unit 434 includes a circular rotary seat 434 which is rotatably mounted on the frame body 31 about a vertical axis, two linkages 435, each of which interconnects the rotary seat 434 and a respective one of the laterally aligning members 432 and which are disposed diametrically opposite to each other, and a laterally aligning driver 436 which is coupled with the rotary seat 434. The rotary seat 434 is rotated by the laterally aligning driver 436 to move synchronously the laterally aligning members 432 through the linkages 435 along the guide rails 431 in opposite directions. Through the laterally aligning members 432 driven to move close to each other in the left-right direction, left and right sides of the solar cell module 900 are thereby pressed to regulate orientation of the solar cell module 900.

With reference to FIGS. 4, 7 and 8, the panel fixing mechanism 5 includes a first gripping unit 51 and a second gripping unit 52 which are mounted on the frame body 31 and disposed above and under the transporting module 41, respectively. The first gripping unit 51 includes a plurality of suction members 511 which are securely mounted on the frame body 31 and spaced apart from each other in both the front-rear direction and the left-right direction. The second gripping unit 52 includes a plurality of pressing members 521 which are disposed corresponding with the suction members 511, respectively. In this embodiment, each suction member 511 is in the form of a suction cup. Each pressing member 521 has a suction structure at an upper end thereof, and is telescopically driven in the up-down direction.

With reference to FIGS. 2, 7 and 8, the pressing members 521 of the second gripping unit 52 are driven to be raised upwardly higher than the transporting module 41 to abut against a bottom surface of the solar panel 901 of the solar cell module 900, and cooperatively move the solar cell module 900 upwardly away from the transporting module 41 until a top surface of the solar panel 901 elastomerically abuts against the suction members 511. The suction members 511 are squeezed by the upwardly moved solar panel 901 and are elastically deformed to generate a negative pressure for tightly attaching to the solar panel 901. At this time, the pressing members 521 cooperate with the suction members 511 to grip and retain firmly the solar panel 901 in the up-down direction.

Alternatively, in another embodiment, only one of the first and second gripping units 51, 52 has a suction structure driven to generate a negative pressure to be attached and connected to the solar panel 901.

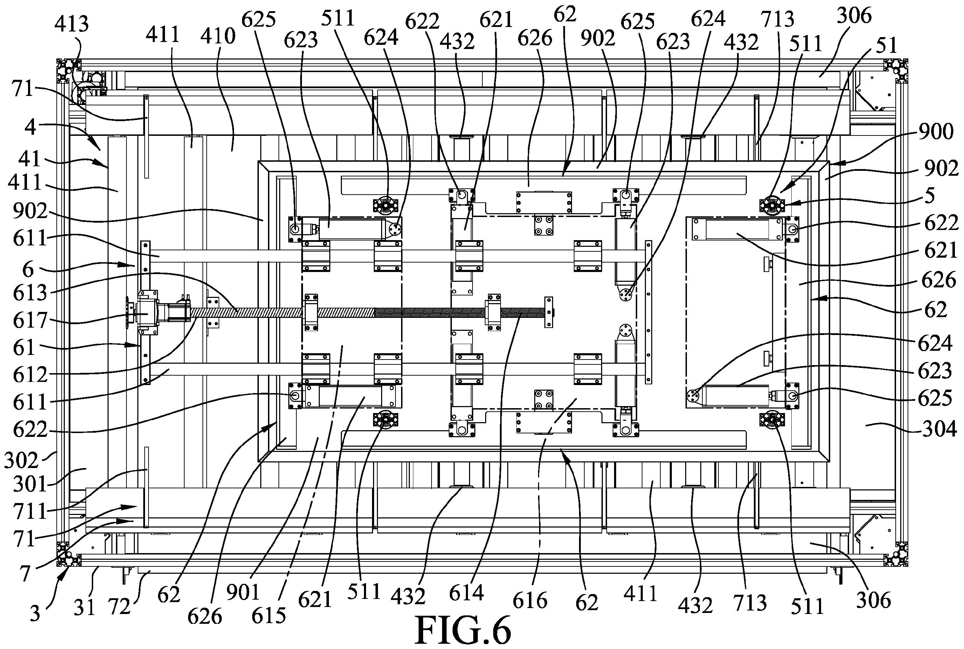

With reference to FIGS. 2, 4 and 6, the removing mechanism 6 is mounted in the operating compartment 301, and includes a seat regulating module 61 which is mounted on the frame body 31 above the transporting module 41, and front, rear, left and right removing modules 62 which are mounted on the frame body 31 and the seat regulating module 61. The front and rear removing modules 62 are spaced apart from each other in the front-rear direction to be respectively registered with the front and rear frame parts 902, and the left and right removing modules 62 are spaced apart from each other in the left-right direction to be respectively registered with the left and right frame parts 902. The front, left and right removing modules 62 are mounted on the seat regulating module 61, and the rear removing module 62 is mounted on the frame body 31.

The seat regulating module 61 includes two guiding rails 611 which are mounted on the frame body 31, which extend in the front-rear direction and which are spaced apart from each other in the left-right direction, a threaded shaft 612 which extends in the front-rear direction and which is rotatably mounted on the frame body 31, a first movable seat 615 which is movably mounted on the guiding rails 611 and which is threadedly engaged with the threaded shaft 612, a second movable seat 616 which is movably mounted on the guiding rails 611 to be movable in the front-rear direction, which is threadedly engaged with the threaded shaft 612 and which is spaced apart from the first movable seat 615 in the front-rear direction, and a regulation driver 617 which is mounted on the frame body 31 and which is coupled with the threaded shaft 612. Through the rotation of the threaded shaft 612 driven by the regulation driver 617, the first and second movable seats 615, 616 are moved synchronously in the front-rear direction along the guiding rails 611.

In this embodiment, the threaded shaft 612 has a first threaded segment 613 and a second threaded segment 614. The ratio of the lead of the first threaded segment 613 and the lead of the second threaded segment 614 is 2:1. The first movable seat 615 is threadedly engaged with the first threaded segment 613, and the second movable seat 616 is threadedly engaged with the second threaded segment 614. Specifically, during the rotation of the threaded shaft 612, the ratio of the moving distance of the first movable seat 615 and the moving distance of the second movable seat 616 in the front-rear direction is 2:1. In other embodiments, the leads of the first and second threaded segments 613, 614 may not be limited to this, or may be the same.

The removing module 62 mounted on the first movable seat 615 includes first and second telescopic cylinders 621, 623 which are mounted below the first movable seat 615 and spaced apart from each other in the left-right direction, and a thrust rod 626 which is connected between the first and second telescopic cylinders 621, 623 and which extends transverse to the first and second telescopic cylinders 621, 623. The first and second telescopic cylinders 621, 623 extend in the front-rear direction. The first telescopic cylinder 621 is securely mounted on the first movable seat 615, and has a forwardly first thrust end portion 622 which is pivotably connected with the thrust rod 626 about a vertical axis. The second telescopic cylinder 623 has a pivot end portion 624 which is pivotably connected with the first movable seat 615 about a vertical axis, and a forwardly second thrust end portion 625 which is opposite to the pivot end portion 624 and which is pivotably connected with the thrust rod 626 about a vertical axis.

The first telescopic cylinder 621 is driven to extend forwardly to bring the first thrust end portion 622 to forwardly press a corresponding end portion of the thrust rod 626. The second telescopic cylinder 623 is driven to extend forwardly to bring the second thrust end portion 625 to forwardly press a corresponding end portion of the thrust rod 626, and is swingable leftwardly and rightwardly relative to the first movable seat 615 through the pivot end portion 624. The forwardly pressed thrust rod 626 thrusts the corresponding frame part 902 forwardly to remove the frame part 902 from the solar panel 901 retained by the panel fixing mechanism 5. The removed frame part 902 may drop from one of the dropdown channels 410, into the collecting compartment 305 and onto the frame collecting mechanism 7.

Each removing module 62 mounted on the second movable seat 616 includes first and second telescopic cylinders 621, 623 which extend in the left-right direction and which are spaced apart from each other in the front-rear direction, and a thrust rod 626 which is connected between the first and second telescopic cylinders 621, 623 and which extends in the front-rear direction transverse to the first and second telescopic cylinders 621, 623. The first telescopic cylinder 621 is securely mounted on the second movable seat 616, and has a first thrust end portion 622 which is pivotably connected with the thrust rod 626 about a vertical axis. The second telescopic cylinder 623 has a pivot end portion 624 which is pivotably connected with the second movable seat 616 about a vertical axis, and a second thrust end portion 625 which is opposite to the pivot end portion 624 and which is pivotably connected with the thrust rod 626 about a vertical axis. Each first telescopic cylinder 621 and each second telescopic cylinder 623 are driven individually to respectively and laterally (in the left-right direction) press front and rear end portions of the thrust rod 626. The laterally pressed thrust rod 626 thrusts the corresponding frame part 902 laterally to remove the frame part 902 from the solar panel 901 retained by the panel fixing mechanism 5. Subsequently, the removed frame part 902 may drop on the rollers 411.

The rear removing module 62 has first and second telescopic cylinders 621, 623 which extend in the front-rear direction and which are spaced apart from each other in the left-right direction, and a thrust rod 626 which is connected between the first and second telescopic cylinders 621, 623 and which extends in the left-right direction transverse to the first and second telescopic cylinders 621, 623. The first telescopic cylinder 621 is securely mounted on the frame body 31, and has a rearwardly first thrust end portion 622 which is pivotably connected with the thrust rod 626 about a vertical axis. The second telescopic cylinder 623 has a pivot end portion 624 which is pivotably connected with the frame body 31 about a vertical axis, and a rearwardly second thrust end portion 625 which is opposite to the pivot end portion 624 and which is pivotably connected with the thrust rod 626 about a vertical axis. The first telescopic cylinder 621 and the second telescopic cylinder 623 are driven individually to respectively and rearwardly press left and right end portions of the thrust rod 626. The rearwardly pressed thrust rod 626 thrusts the corresponding rear frame part 902 rearwardly to remove the rear frame part 902 from the solar panel 901 retained by the panel fixing mechanism 5. Subsequently, the removed rear frame part 902 may drop through the first transition compartment 304 into the collecting compartment 305 and onto the frame collecting mechanism 7.

With reference to FIGS. 3, 8 and 9, the frame collecting mechanism 7 includes two deflecting rod modules 71 which are mounted on the frame body 31, which extend in the front-rear direction and which are spaced apart from each other in the left-right direction to be at left and right sides of the transporting module 41, and a frame collecting module 72 which is mounted on the frame body 31 in the operating compartment 305 and which conveys each of the frame parts 902 dropping in the collecting compartment 305 outwardly of the frame mechanism 3.

Each deflecting rod module 71 includes a deflecting rod member 711 which is rotatably mounted on the frame body 31 about an axis in the front-rear direction, and a rod driver 714 which is mounted between the frame body 31 and the deflecting rod member 711. The deflecting rod member 711 has an axle portion 712 which extends in the front-rear direction and which is rotatably mounted on the frame body 31 about the axis, and a plurality of deflecting rod portions 713 which are connected with the axle portion 712, which are spaced apart from each other in the front-rear direction and which extend toward the other deflecting rod module 71. The rod driver 714 is controlled to drive rotation of the axle portion 712 such that the deflecting rod portions 713 are turned upwardly away from the transporting module 41 and cooperatively carry the corresponding frame part 902 on the rollers 411 to move the frame part 902 above a corresponding one of the second transition compartments 306, and then release the frame part 902 and permit the frame part 902 to drop into the corresponding second transition compartment 306 and further into the collecting compartment 305 and onto the frame collecting module 72.

The frame collecting module 72 is in the form of a conveyer belt device which is disposed in the operating compartment 305 and which extends in the left-right direction and below the transporting module 41 for carrying the frame parts 902 dropping in the collecting compartment 305 through either one dropdown channel 410, dropping into the collecting compartment 305 through the first transition compartment 304, and dropping into the collecting compartment 305 through the second transition compartments 306, and for conveying each of the frame parts 902 outwardly of the frame mechanism 3 either one of leftwardly and rightwardly.

With reference to FIGS. 2, 3 and 5, during a frame removing operation, through the transporting module 41, the solar cell module 900 is conveyed automatically and rearwardly into the operating compartment 301, and the rear stop modules 42 are shifted to the upper stopping position to stop the rearward movement of the solar cell module 900. At the same time, the laterally aligning modules 43 regulate the orientation of the solar cell module 900 in the left-right direction.

With reference to FIGS. 2, 5 and 7, subsequently, the second gripping unit 52 is driven to move the solar cell module 900 upwardly away from the transporting module 41, and cooperates with the first gripping unit 51 to grip the solar panel 901 in the up-down direction. At this stage, the removing mechanism 6 is disposed at an area surrounded by the frame parts 902.

Next, the control device controls, according to information on the dimension of the solar cell module, the seat regulating module 61 to move the front removing module 62 and the left and right removing modules 62 in the front-rear direction relative to the solar cell module 900 so as to move the front removing module 62 forwardly close to the front frame part 902, and synchronously move the left and right removing modules 62 to bring the centers of the thrust rods 626 in the front-rear direction into alignment with the centers of the corresponding left and right frame parts 900.

Subsequently, the control device controls the operation of the removing modules 62 such that the front and rear frame parts 902 are removed firstly and the left and right frame parts 902 are then removed from the solar panel 901.

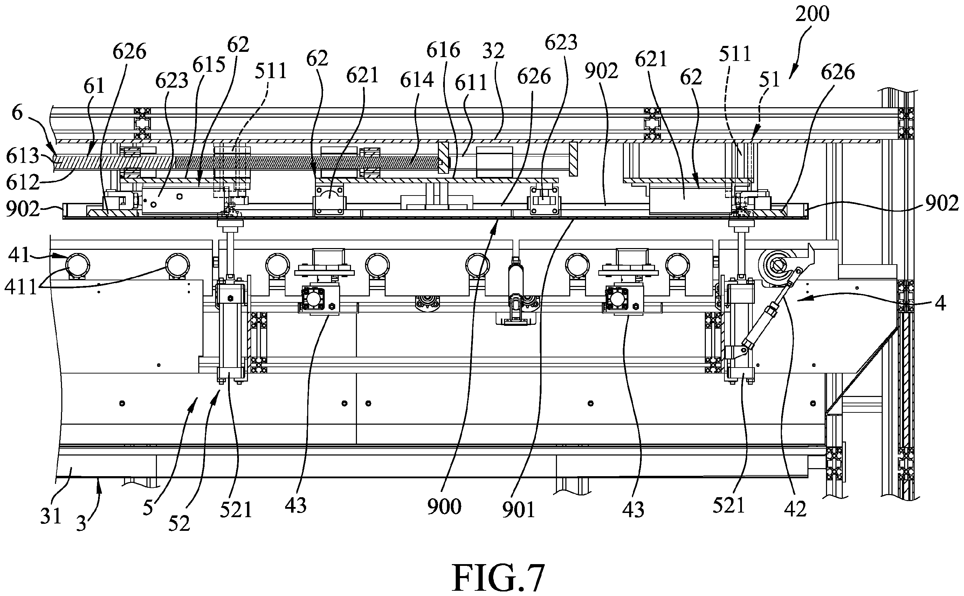

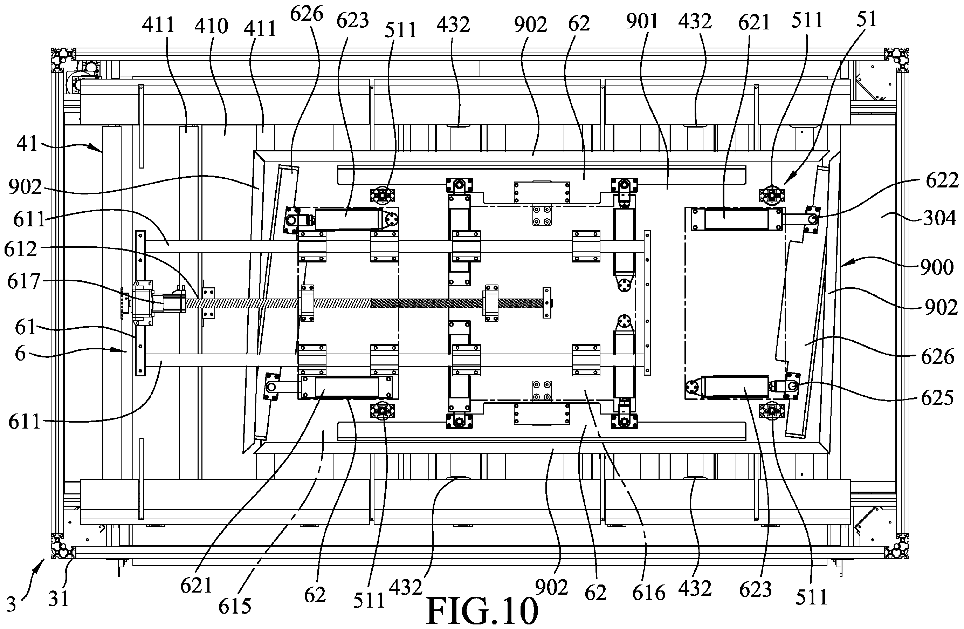

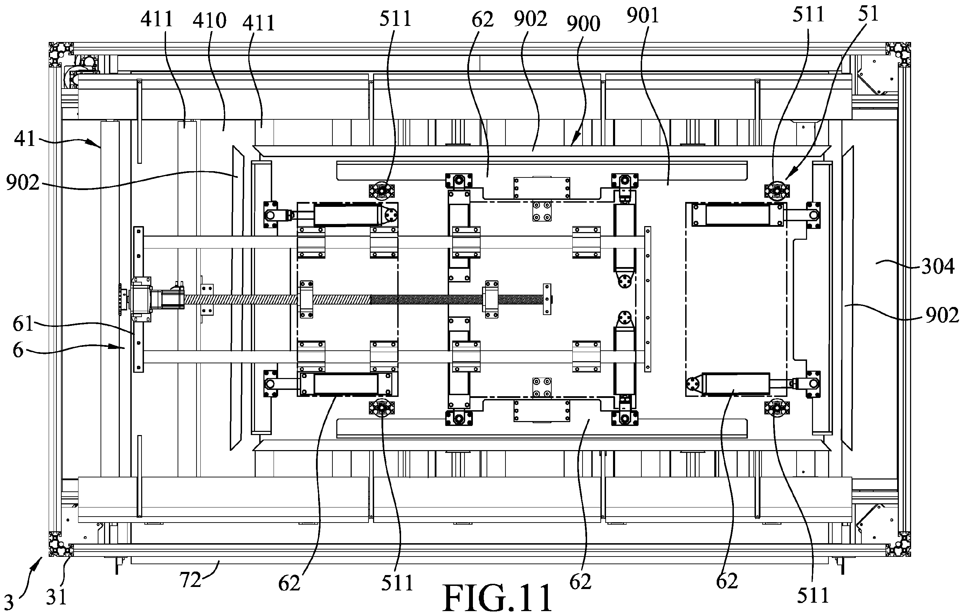

With reference to FIGS. 7, 10 and 11, specifically, the first telescopic cylinders 621 of the front and rear removing modules 62 are operated to extend to firstly bring the corresponding end portion of the thrust rods 626 to thrust the end portions of the corresponding frame parts 902 in the front-rear direction until the end portions of the frame parts 902 are removed from the solar panel 901. Then, the second telescopic cylinders 623 of these removing modules 62 are operated to extend to bring the other end portions of the thrust rods 626 to thrust the other end portions of the corresponding frame parts 902 until the other end portions of the frame parts 902 are removed from the solar panel 901. Each removed frame part 902 drops on the frame collecting module 72, and is conveyed in the left-right direction by the frame collecting module 72 outwardly of the frame mechanism 3.

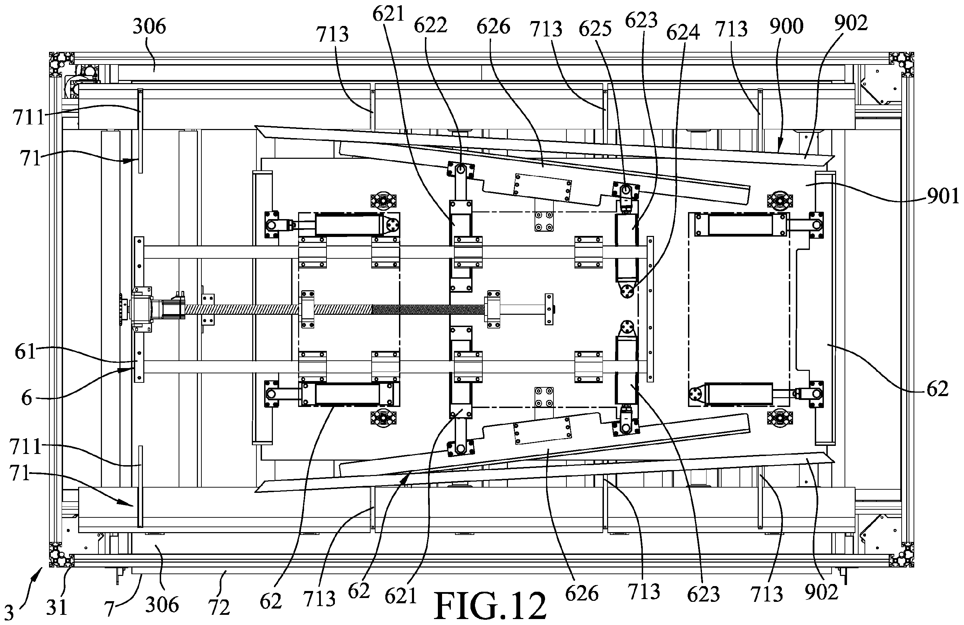

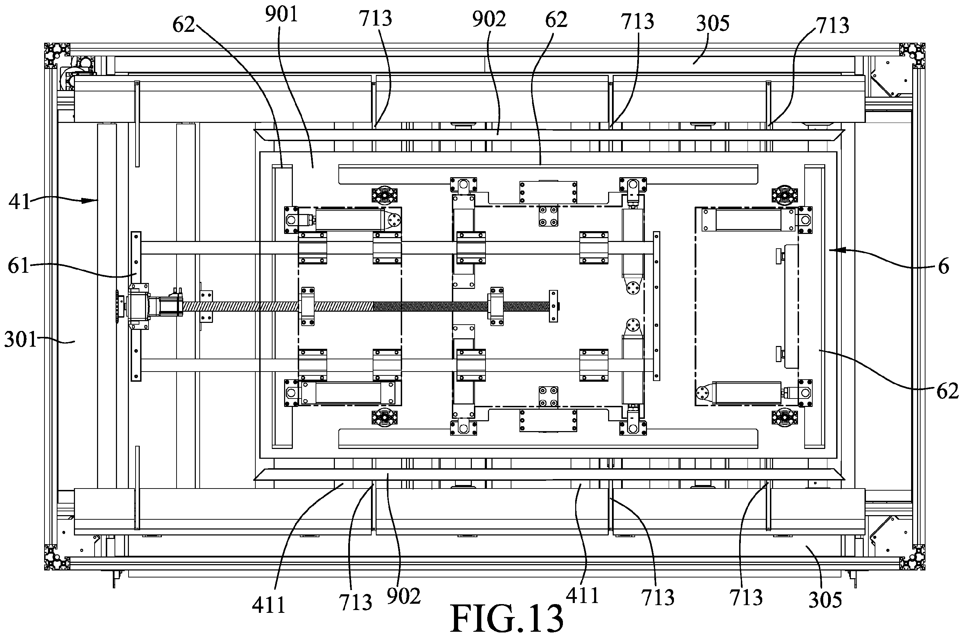

With reference to FIGS. 12 and 13, subsequently, similar to the previous operation of the front and rear removing modules 62, the first and second telescopic cylinders 621, 623 of the left and right removing modules 62 are controlled to sequentially extend to firstly bring the corresponding end portions of the thrust rods 626 to thrust the end portions of the left and right frame parts 902, and then bring the other end portions of the thrust rod 626 to thrust other end portions of the frame parts 902. The removed frame parts 902 drop on the rollers 411.

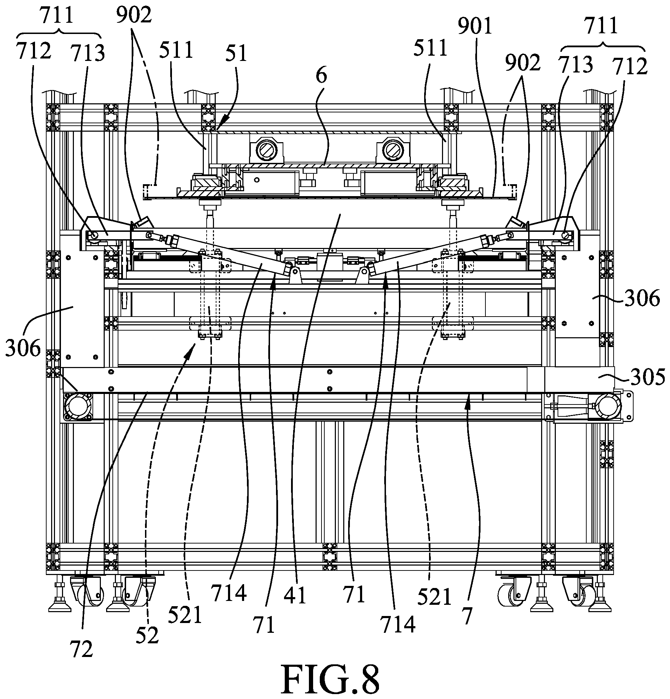

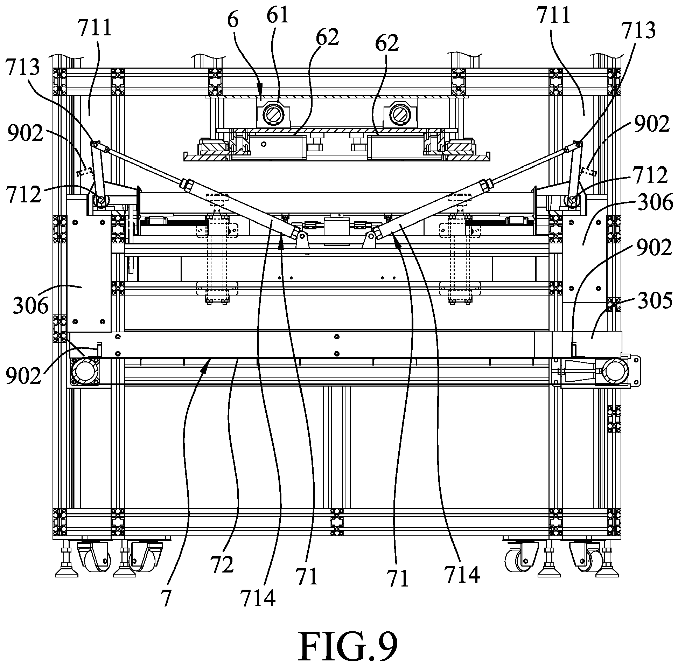

With reference to FIGS. 8 and 9, the deflecting rod modules 71 are operated to move upwardly the frame parts 902 and carry laterally the frame parts 902 to permit the frame parts 902 to drop into the second transition compartments 306 and further onto the frame collecting module 72. The frame parts 902 are further transported in the left-right direction outwardly of the frame mechanism 3.

In other various embodiments, the control device can control firstly the operation of the left and right removing modules 62 to remove the left and right frame parts 902, and then control the operation of the front and rear removing modules 62 to remove the front and rear frame parts 902.

With each removing modules 62 sequentially thrusting two end portions of each frame part 902, the frame parts 902 are removed from the solar panel 901 while maintaining the shape thereof without deformation of the frame parts 902.

After the removal operation of the frame parts 902 is completed, the pressing members 521 of the second gripping unit 52 are lowered to bring the solar panel 901 into disengagement from the suction members 511 of the first gripping unit 51 and placement on the transporting module 41. Finally, the rear stop modules 42 are controlled to shift to the lower retreating position, and the transporting module 41 is driven to transport the solar panel 901 outwardly of the operating compartment 301 so as to accomplish the frame removing operation of the solar cell module 900.

In this embodiment, through the seat regulating module 61 operated to regulate the front removing module 62 and the left and right removing modules 62, the removing apparatus of the disclosure can be adapted for the frame removing operation of solar cell modules 900 of different lengths. In other embodiment, the seat regulating module 62 may be provided to regulate only the front removing module 62. Alternatively, in another embodiment, the seat regulating module 62 may be omitted, and each of the removing modules 62 is securely mounted on the frame body 31 to perform a frame removing operation of a certain sized solar cell module 900. Specifically, the first telescopic cylinder 621 of each removing module 62 is securely mounted on the frame body 31 and non-horizontally rotatable relative to the frame body 31.

Moreover, in other various embodiments, the deflecting rod modules 71 are omitted, and the removed left and right frame parts 902 are pressed laterally by the left and right removing modules 62 to drop into the second transition compartments 306.

As illustrated, the frame parts 902 can be removed from the solar panel 901 while maintaining the shape thereof without any deformation.

Further, by incorporating the deflecting rod modules 71 and the frame collecting module 72 of the frame collecting mechanism 7 in the removing apparatus, the removing apparatus of the disclosure can perform an automatic collecting process for collecting the removed frame parts 902 so as to perform a fully automatic operation of the removing apparatus 200.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A removing apparatus (200) for removing a frame from a solar panel (901) of a solar cell module (900), the frame including front, rear, left and right frame parts (902) attached to front, rear, left and right sides of the solar panel (901) and each having two ends, **characterized by**:
a frame mechanism (3);
a transporting mechanism (4) which is mounted on said frame mechanism (3) for carrying and transporting the solar cell module (900);
a panel fixing mechanism (5) which is mounted on said frame mechanism (3), said panel fixing mechanism (5) being operable to move the solar cell module (900) upwardly away from said transporting mechanism (4) and to be retainingly connected with the solar panel (901); and
a removing mechanism (6) which is mounted on said frame mechanism (3) and disposed above said transporting mechanism (4), said removing mechanism (6) including front, rear, left and right removing modules (62) which are operable to be respectively registered with the front, rear, left and right frame parts (902), each of said front, rear, left and right removing modules (62) being driven individually to thrust sequentially the two ends of a corresponding one of the front, rear, left and right frame parts (902) so as to remove firstly one end of the corresponding frame part (902) and then the other end thereof from the solar panel (901).

2. The removing apparatus of claim 1, wherein said panel fixing mechanism (5) includes a first gripping unit (51) which is disposed above said transporting mechanism (4), and a second gripping unit (52) which is disposed under said transporting mechanism (4), said second gripping unit (52) being driven to be raised upwardly to move the solar cell module (900) upwardly away from said transporting mechanism (4) and to cooperate with said first gripping unit (51) to grip and retain the solar panel (901) in an up-down direction.

3. The removing apparatus of claim 2, wherein said first gripping unit (51) includes a plurality of suction members (511) which are disposed above the solar panel (901), said second gripping unit (52) including a plurality of pressing members (521) which are telescopically driven in the up-down direction, said pressing members (521) being controlled to be raised upwardly to move the solar panel (901) and to cooperate with said suction members (511) to grip and retain the solar panel (901) in the up-down direction, at least one of said suction members (511) and said pressing members (521) having an end which is squeezed by the solar panel (901) and elastically deformed to generate a negative pressure for attaching to the solar panel (901).

4. The removing apparatus of claim 1, wherein said front and rear removing modules (62) are spaced apart from each other in a front-rear direction, and said left and right removing modules (62) are spaced apart from each other in a left-right direction, said removing mechanism (6) further including a seat regulating module (61) which is mounted on said frame mechanism (3), said front removing module (62) being connected and moved with said seat regulating module (61), said seat regulating module (61) being driven to move said front removing module (62) relative to the solar cell module (900) in the front-rear direction.

5. The removing apparatus of claim 4, wherein said left and right removing modules (62) are connected and moved with said seat regulating module (61), and said rear removing module (62) is mounted on said frame mechanism (3), said seat regulating module (61) being driven to move said left and right removing modules (62) relative to the solar cell module (900) in the front-rear direction.

6. The removing apparatus of claim 5, wherein said seat regulating module (61) includes two guiding rails (611) which are mounted on said frame mechanism (3), which extend in the front-rear direction and which are spaced apart from each other in the left-right direction, a threaded shaft (612) which extends in the front-rear direction and which is rotatably mounted on said frame mechanism (3), a first movable seat (615) which is movably mounted on said guiding rails (611) to be movable in the front-rear direction and which is threadedly engaged with said threaded shaft (612), a second movable seat (616) which is movably mounted on said guiding rails (611) to be movable in the front-rear direction, which is threadedly engaged with said threaded shaft (612) and which is spaced apart from said first movable seat (615) in the front-rear direction, and a regulation driver (617) which is mounted on said frame mechanism (3) and which is coupled with said threaded shaft (612), said front removing module (62) being mounted on said first movable seat (615), said left and right removing modules (62) being mounted on said second movable seat (616), said regulation driver (617) being operable to drive rotation of said threaded shaft (612) to bring said first and second movable seats (615, 616) to move corresponding ones of said removing modules (62) in the front-rear direction.

7. The removing apparatus of claim 6, wherein said threaded shaft (612) has a first threaded segment (613) and a second threaded segment (614), said first threaded segment (613) having a lead which is larger than that of said second threaded segment (614), said first movable seat (615) being threadedly engaged with said first threaded segment (613), said second movable seat (616) being threadedly engaged with said second threaded segment (614).

8. The removing apparatus of claim 6, wherein each of said front, rear, left and right removing modules (62) includes a first telescopic cylinder (621), a second telescopic cylinder (623), and a thrust rod (626) which is connected between said first and second telescopic cylinders (621, 623) and which extends transverse to said first and second telescopic cylinders (621, 623) to remove the corresponding frame part (902) from the solar panel (901), said first telescopic cylinder (621) being securely mounted on a corresponding one of said frame mechanism (3), said first movable seat (615) and said second movable seat (616), and having a first thrust end portion (622) which is horizontally and pivotably connected with said thrust rod (626), said second telescopic cylinder (623) having a pivot end portion (624) which is horizontally and pivotably connected with said corresponding one of said frame mechanism (3), said first movable seat (615) and said second movable seat (616), and a second thrust end portion (625) which is opposite to said pivot end portion (624) and which is horizontally and pivotably connected with said thrust rod (626), said first and second telescopic cylinders (621, 623) of each of said removing modules (62) being controlled to sequentially extend toward said thrust rod (626) to firstly bring said first thrust end portion (622) and a corresponding end portion of said thrust rod (626) thereof to horizontally thrust one end portion of the corresponding frame part (902), and then bring said second thrust end portion (625) and a corresponding end portion of said thrust rod (626) thereof to horizontally thrust the other end portion of the corresponding frame part (902).

9. The removing apparatus of claim 1, wherein each of said front, rear, left and right removing modules (62) includes a first telescopic cylinder (621) and a second telescopic cylinder (623) which are mounted on said frame mechanism (3), and a thrust rod (626) which is connected between said first and second telescopic cylinders (621, 623) and which extends transverse to said first and second telescopic cylinders (621, 623) to remove a corresponding one of the frame parts (902) from the solar panel (901), said first telescopic cylinder (621) being securely mounted on said frame mechanism (3) to be non-horizontally rotatable relative to said frame mechanism (3), and having a first thrust end portion (622) which is horizontally and pivotably connected with said thrust rod (626), said second telescopic cylinder (623) having a pivot end portion (624) which is horizontally and pivotably connected with said frame mechanism (3), and a second thrust end portion (625) which is opposite to said pivot end portion (624) and which is horizontally and pivotably connected with said thrust rod (626), said first and second telescopic cylinders (621, 623) of each of said removing modules (62) being controlled to sequentially extend toward said thrust rod (626) to firstly bring said first thrust end portion (622) and a corresponding end portion of said thrust rod (626) thereof to horizontally thrust one end portion of the corresponding frame part (902), and then bring said second thrust end portion (625) and a corresponding end portion of said thrust rod (626) thereof to horizontally thrust the other end portion of the corresponding frame part (902).

10. The removing apparatus of claim 1, wherein said frame mechanism (3) has an operating compartment (301) for receiving the solar cell module 900 carried by said transporting mechanism (4), a collecting compartment (305) which is formed under said operating compartment (301), a first transition compartment (304) which is formed rearwardly of said transporting mechanism (4) and which is in spatial communication with both said operating compartment (301) and said collecting compartment (305) in an up-down direction for permitting the rear frame part (902) removed from the solar panel (901) to drop into said collecting compartment (305) through said first transition compartment (304), and two second transition compartments (306) which are respectively formed at left and right sides of said transporting mechanism (4) and which are in spatial communication with both said operating compartment (301) and said collecting compartment (305) in the up-down direction for permitting the left and right frame parts (902) removed from the solar panel (901) to drop into said collecting compartment (305) through said second transition compartments (306), respectively, said transporting mechanism (4) having a plurality of dropdown channels (410) which extend in a left-right direction and which are spaced apart from each other in a front-rear direction for permitting the front frame part (902) removed from the solar panel (901) to drop into said collecting compartment (305) through one of said dropdown channels (410);
said removing apparatus further comprising a frame collecting mechanism (7) which is mounted on said frame mechanism (3), said frame collecting mechanism (7) including a frame collecting module (72) which is disposed in said operating compartment (305) and which conveys each of the frame parts (902) dropping in said collecting compartment (305) outwardly of said frame mechanism (3).

11. The removing apparatus of claim 10, wherein said frame collecting mechanism (7) further includes two deflecting rod modules (71) which are spaced apart from each other in the left-right direction, each of said deflecting rod modules (71) including a deflecting rod member (711) which is rotatably mounted on said frame mechanism (3) about an axis in the front-rear direction, and a rod driver (714) which is mounted between said frame mechanism (3) and said deflecting rod member (711), said deflecting rod member (711) having an axle portion (712) which is rotatably mounted on said frame mechanism (3) about the axis, and a plurality of deflecting rod portions (713) which are connected with said axle portion (712), which are spaced apart from each other in the front-rear direction and which extend toward the other one of said deflecting rod modules (71), said rod driver (714) being controlled to drive rotation of said axle portion (712) such that said deflecting rod portions (713) are turned upwardly away from the solar cell module (900) and cooperatively carry the corresponding frame part (902) removed from the solar panel (901) to move the corresponding frame part (902) above a corresponding one of said second transition compartments (306).
